# EUROPEAN PATENT APPLICATION

(11) **EP 1 657 461 A2**
(43) Date of publication of application: **17.05.2006**
(21) Application number: 05256956.3
(22) Date of filing: 10.11.2005
(51) Int. Cl.: F16D 13/58

(54) **Clutch assembly**

(30) Priority: 10.11.2004 GB 0424748
(71) Applicant: AP Driveline Technologies Limited, Reading Berkshire RG1 7SR (GB)
(72) Inventor: Young, Alastair, c/o AP Driveline Technologies Ltd, Leamington Spa, Warwickshire CV31 3ER (GB)
(74) Representative: Moffat, John Andrew

(57) **Abstract**

The present invention relates to an improved clutch assembly. It is known to provide a clutch assembly in which a Belleville spring is trapped either against a diaphragm spring or a clutch cover in order to prevent the Belleville spring rattling as the clutch facing wears in use. The location of the Belleville spring in which such undesirable rattling does not occur will be referred to as the operative position. Known methods such as special shimming arrangements and procedures during assembly of the clutch cause difficulties due to the need for part assembly, measurement and subsequent part removal in order to change the shimming before final assembly. There is disclosed a clutch assembly in which measurement and adjustment may be made after full assembly has been completed comprising a cover 10, a diaphragm spring 6, and a Belleville spring 4 located between the diaphragm spring 6 and the cover 10, in which the Belleville spring 4 is located in an operative position by adjustable means. It is an advantage of this assembly, that it is measured and adjusted after full assembly has been completed.

## Description

The present invention relates to an improved clutch assembly.

It is known to provide a clutch assembly in which a Belleville spring is trapped either against a diaphragm spring or a clutch cover in order to prevent the Belleville spring rattling as the clutch facing wears in use. The location of the Belleville spring in which such undesirable rattling does not occur will be referred to as the operative position. Known methods include special shimming arrangements and procedures during assembly of the clutch. This in turn causes difficulties due to the need for part assembly, measurement and subsequent part removal in order to change the shimming before final assembly.

It will be understood that a Belleville spring is a disc shaped spring used to apply tension. Reference herein to a Belleville spring includes reference to disc shaped springs having equivalent function.

It is an advantage of the present invention that it overcomes this difficulty. In particular, a clutch in accordance with the present invention is measured and adjusted after full assembly has been completed.

According to a first aspect of the present invention, there is provided a clutch assembly in which measurement and adjustment may be made after full assembly has been completed comprising a cover, a diaphragm spring, and a Belleville spring located between the diaphragm spring and the cover, in which the Belleville spring is located in an operative position by adjustable means.

Preferably, the adjustable means comprises at least one split section ring, locating means and positioning means, the cover being provided with means to locate each of the at least one split section rings in position with respect to the cover.

More preferably, the locating means comprises a generally circular element having a plurality of spaced members, the spaced members retaining the Belleville spring radially in position.

Preferably, the positioning means comprises a plurality of cam adjusters, each of the plurality of cam adjusters being located in a suitable opening in the cover. More preferably, at least one of the plurality of cam adjusters comprises a headed member having a first generally cylindrical shaft disposed about a first longitudinal axis and a second cammed shaft extending from the first generally cylindrical shaft, the second cammed shaft being disposed about a second longitudinal axis offset from the first. Advantageously the second cammed shaft comprises a plurality of faces, each of the plurality of faces being located at a different radial distance from the first longitudinal axis.

Preferably, the positioning means is provided with tool engaging means.

Preferably, the at least one split section ring has a tapering section. Alternatively, the at least one split section ring is of 'L'-shaped section.

Preferably, there are two split section rings, one located inside the other, the ends of each split section ring being disposed diametrically one from the other. More preferably, the outer split ring is of flat rectangular section and the inner split ring is of upright rectangular section.

Preferably, the or the outer of the at least one split ring is further provided with at least one set of radially outward extending lugs, such that a one of the positioning means can in use be located in a slot formed between the adjacent lugs.

Preferably, the spaced members are radially directed and the generally circular element undulates in a circumferential direction.

Alternatively a flat plate is located against the cover in the region of the Belleville spring. More preferably a single split section ring is provided and the flat plate has angled faces that mate with angled chamfers provided on free ends of the split section ring.

Alternatively a single split ring is provided, the single split ring being of flat section, the cover in the region adjacent the single split ring being angled towards the Belleville spring.

Preferably each pair of spaced members is disposed alternately in opposite axial directions, each spaced member of each pair extending from the locating means circumferentially in its respective axial direction.

Preferably, in at least one axial direction, each of said pair of spaced members is provided with a cut off extending from a radially inward region adjacent the locating means to a free end of the spaced member.

Preferably, the radially spaced members are located radially inward on the locating means and in that a plurality of deformed regions are provided on a radially outer periphery of the locating means.

Preferably, the assembly further comprises restraining means extending from the cover to restrain the free ends of the or an outer one of the at least one split ring. More preferably, the restraining means comprises a pair of stepped rivets secured to the cover.

The invention will now be described, by way of example only, with reference to the accompanying drawings, in which:
Figure 1 shows the principal components in a cut-away view of a clutch assembly in accordance with the present invention;
Figure 2 shows a general view of the clutch assembly;
Figure 3 shows a close up view of a tag for use in the present invention;
Figure 4 shows a perspective view of an adjuster peg for use in the present invention;
Figure 5 shows a side view of the adjustment peg of Figure 4;
Figure 6 shows a section through line X-X of Figure 5;
Figure 7 shows a graph illustrating the clutch spring characteristics of the system;
Figure 8 shows a circlip for use with the present invention;
Figure 9 shows a detail of the circlip of Figure 9;
Figure 10 shows a perspective view of a support washer for use in the present invention;
Figure 11 1 shows a section of a clutch arrangement incorporating a second embodiment of the present invention;
Figure 12 shows a section along line Z-Z of Figure 11;
Figure 13 shows a section of a clutch arrangement incorporating a third embodiment of the present invention;
Figure 14 shows a perspective view of a further embodiment of a support washer for use in the present invention;
Figure 15 shows a perspective view of a further embodiment of a support washer for use in the present invention;
Figure 16 shows a section of a clutch arrangement incorporating a fourth embodiment of the present invention;
Figure 17 shows a detail of a second form of circlip for use with the present invention;
Figure 18 shows a section of a clutch arrangement incorporating the fourth embodiment of the present invention and the second form of circlip;
Figure 19 shows a perspective view of a clutch arrangement in accordance with the present invention;
Figure 20 shows a sectional view of the parts shown in Figure 19;
Figure 21 shows a detail of a third form of circlip for use with the present invention;
Figure 22 shows a detail of a further embodiment of a support washer for use in the present invention;
Figure 23 shows a section of a clutch arrangement incorporating the support washer shown in Figure 22; and
Figure 24 shows a detail of a fourth form of circlip for use with the present invention.

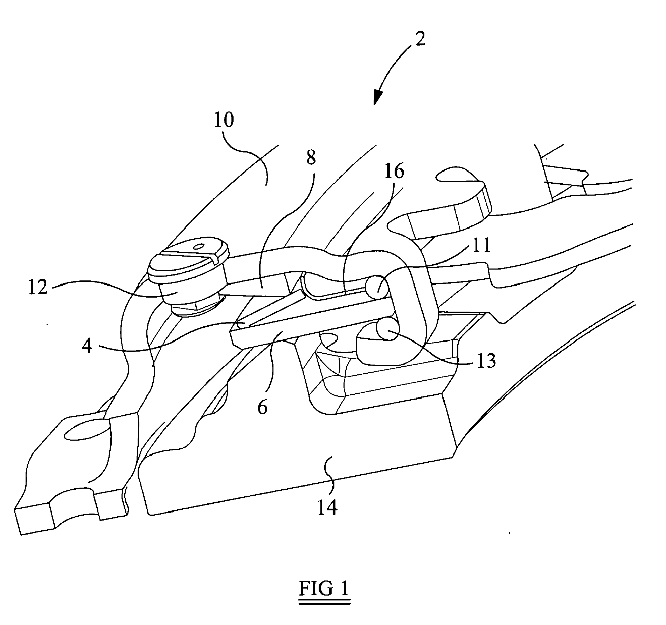

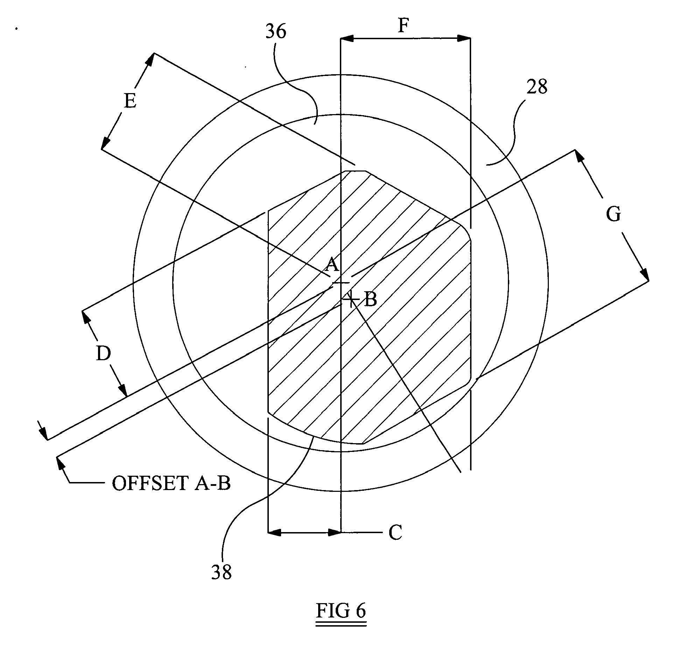

Referring first to Figures 1 to 10, a clutch assembly 2 is shown. A Belleville spring 4 is shown sitting on top of a diaphragm spring 6. The Belleville spring 4 reacts through a tapered section ring, for example a circlip 8, against a cover 10. The circlip 8 is located in position by a plurality of, in the illustrated embodiment three, adjuster pegs 12 mounted in holes or openings in the cover 10. A pair of wire rings 11,13 locate the diaphragm spring 6 in position in the cover 10.

Each of the adjuster pegs 12 is provided with a series of flats. Each of the flats varies in distance from a central axis of the respective adjuster peg 12. When each adjuster peg 12 is rotated about the central axis so that a different flat locates against the circlip 8, the circlip 8 is radially deformed inwards towards the centre of the clutch by varying amounts. In turn, this means that an effective radius of a fulcrum edge on the circlip 8 changes progressively with adjustment of each adjuster peg 12. Further, for a given position of a pressure plate 14 and diaphragm spring 6, the Belleville spring 4 is forced to a flatter condition as the fulcrum is moved inwards.

This has the effect of changing the preloading of the Belleville spring 4 at the new clamped position of the clutch thereby providing the required adjustment.

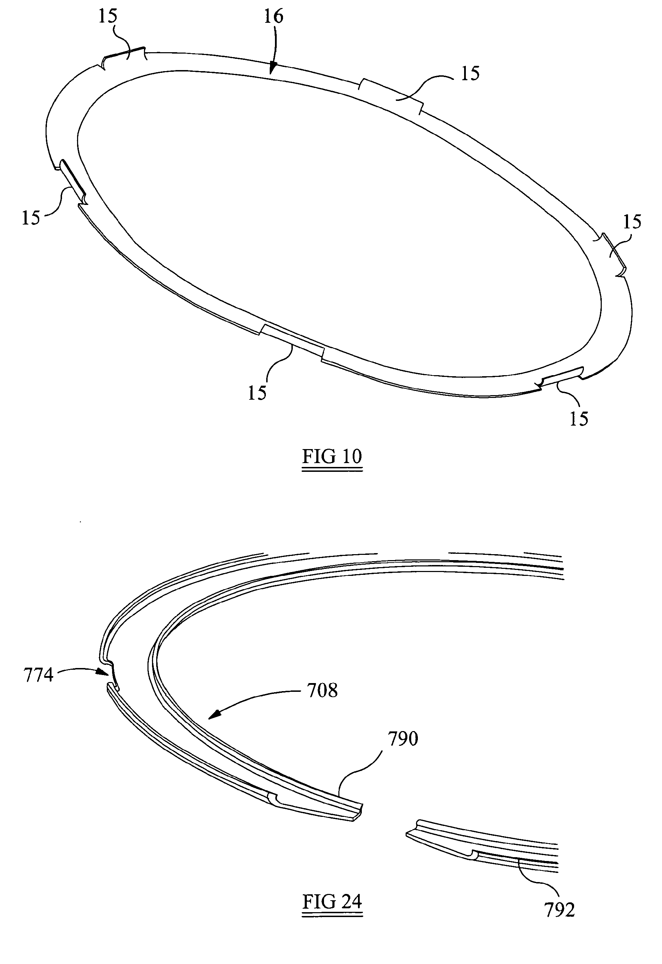

The Belleville spring is located radially by tags or members 15 (Figure 10) on a waved support washer 16. The support washer 16 comprises a generally circular element that undulates in a circumferential direction. The support washer 16 is in turn located on an outer periphery of one of the main clutch fulcrum rings 11. The undulating surfaces of the support washer 16 apply load against the diaphragm spring 6 on the one side and the Belleville spring 4 on the other side, near an inner edge of the Belleville spring 4.

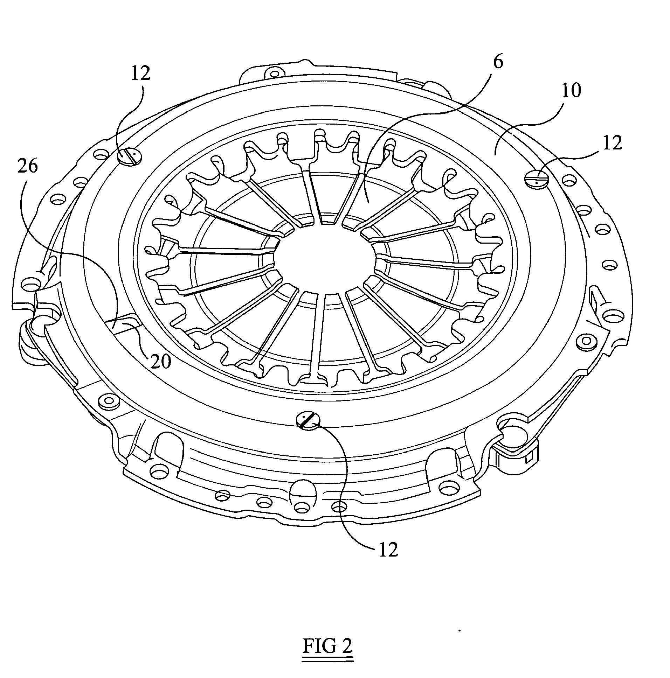

Referring to Figure 2, there may be seen a tag 20, slit into the cover 10. Inside of the cover 10, a free end of the tag 20 protrudes into a gap between the open ends 22,24 of the circlip 8, to locate the circlip 8 in position with respect to the cover 10 to prevent the circlip 8 from spinning around. The width of the tag 20 is less than the minimum gap between the ends 22, 24 of the circlip 8 at full adjustment, though excess clearance is not important for present purposes. The tag 20 may be replaced by any suitable element such as a bolt, peg or rivet fixed in the cover 10.

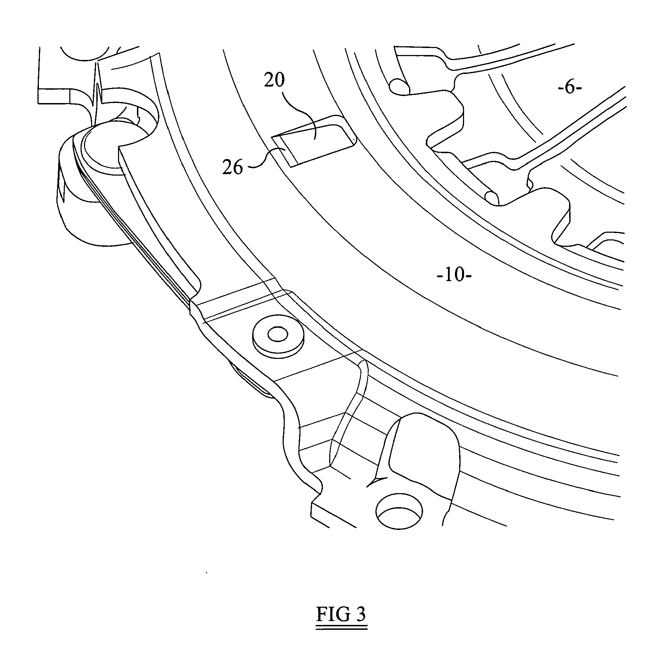

As may be seen from Figure 3, the tag 20 is bent inwards, in line with a tapered section of the circlip 8 within the cover 10. Bending with the hinge 26 located at the radially inner end of the tag 20 would cause interference with the Belleville spring 4 when in a released condition.

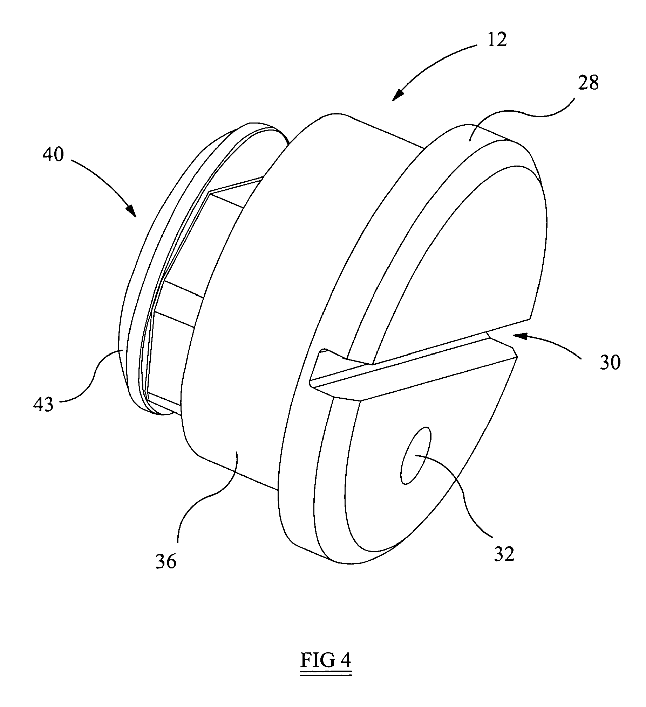

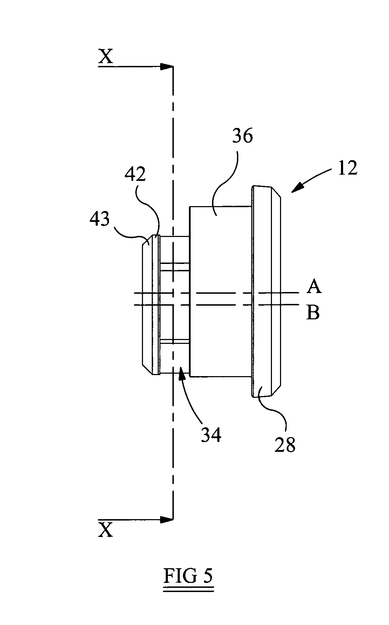

An adjuster peg 12 is shown in detail in Figures 4 and 5. The adjuster peg 12 comprises a generally cylindrical shaft 36, the shaft 36 being adapted to be located in the holes or openings in the cover 10. The adjuster peg 12 further comprises a head portion comprising an outwardly directed flange 28. The head portion prevents stop the adjustment peg 12 from dropping into the clutch assembly. The flange 28 further includes tool engaging means. In the illustrated embodiment this takes the form of a slot or channel 30 for engagement with a driver. The slot or channel could also take the form of a flatted or socket head for engagement with a spanner or Allen type key.

The head portion further includes an indent 32, or other suitable marking feature, to enable a user visually to identify the orientation of the adjustment peg 12 in use, during or after adjustment, to ensure all three of the adjustment pegs 12 are in the same orientation or position (that is each adjustment peg 12 has a corresponding flat against the circlip 8).

As seen in Figure 5, the left hand end of each adjustment peg 12 has a cylindrical section 34 arranged to be offset or eccentric to the main part of the shaft 36. The flats are formed as part of this cylindrical section 34. As previously noted, each of the flats is located at different radial distance from a central axis A of the adjuster peg 12. By rotating each adjustment peg 12 in its hole in the cover 10, different flats are used to locate the circlip 8. Thus the circlip 8 is progressively deformed further and further away from the central axis A of the peg towards the centre of the clutch with each step change in angular position.

In the adjuster peg 12 illustrated there are five flats displaced at 60 degrees from one another. Each of the flats is a different distance C, D, E, F, G from the central axis A of the adjuster peg 12. There can be seen a part circular portion 38 bridging the longest and shortest sections between the flats. The part circular portion 38 has a radius centred on the offset or eccentric axis B of the offset cylindrical section 34. In the illustrated embodiment the flats have equal increments between each of the distances C, D, E ,F and G, though it will be understood that other suitable distances may be chosen.

A simple hexagon centred on axis B would give unequal increments, and only four out of the six flats would give different steps in adjustment. A greater number of flats at a smaller angle between each would also be possible, but the integrity of the method may be compromised if the adjustment pegs 12 were set at different positions, or slipped round after setting due to the flats being too short.

A tip 40 of the offset cylindrical section 34 has a cylindrical portion 42 centred on axis B. The cylindrical portion 42 has a slightly larger diameter than the effective diameter of the part circular portion 38 between the flats. This step in diameter ensures that the adjustment peg 12 cannot drop back out of the hole or opening in the cover 10, with the circlip 8 being preloaded radially against the adjustment peg 12 at all times. The cylindrical portion 42 of the tip 40 is provided with a bevelled edge 43. This aids in the centring of the adjustment peg 12 as a user inserts the adjustment peg 12 into its opening in the cover 10.

Initially, the circlip 8 is assembled with the first flat on each adjustment peg 12 locating the circlip (that is the face located distance C from axis A). In this position, it is advantageous that the circlip 8 is deformed in order to build in an initial radial pre-load.

When the clutch assembly 2 is tested, if the load contribution from the Belleville spring 4 is insufficient, each of the adjustment pegs is rotated. In the illustrated embodiment each of the adjustment pegs 12 would be turned 60 degrees at a time, thereby ensuring that each of the adjustment pegs 12 is in phase with the others before any re-test.

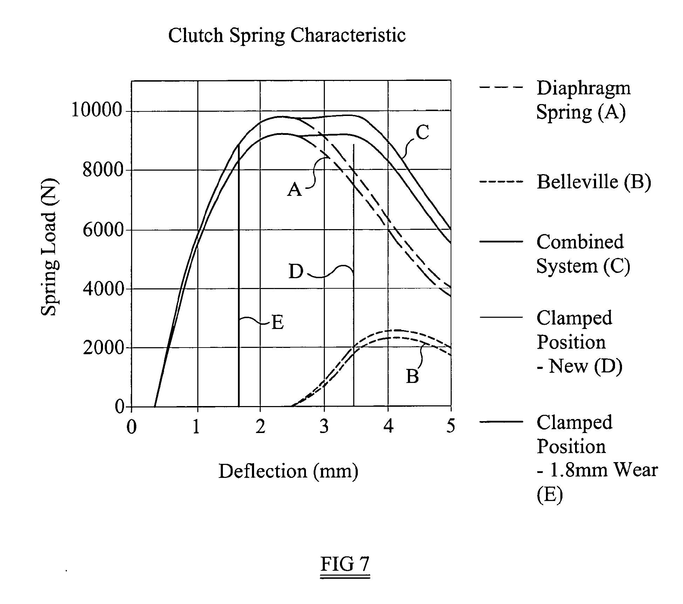

If the contribution from the Belleville spring 4 is insufficient, the right hand peak of the combined characteristic (see line C of Figure 7) will be too low relative to the left hand peak, thereby creating the need for an adjustment. With all components in a nominal condition, the clutch would be designed to give the correct matching of the Belleville spring 4 and the circlip 8 at the third out of five possible adjustment peg 12 positions.

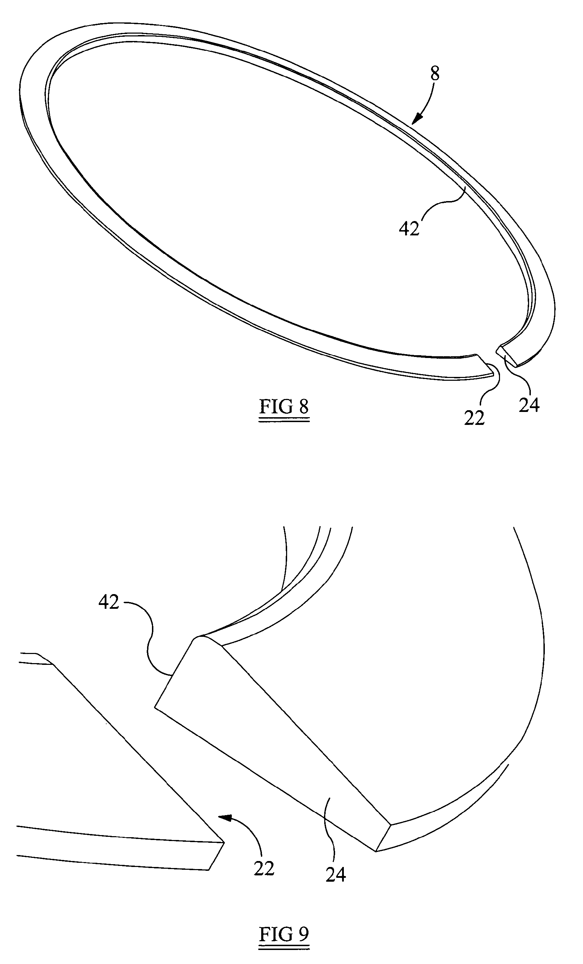

Referring to Figures 8 and 9, the thick inner edge 42 of the circlip 8 acts as the fulcrum for the Belleville spring 4. The thick inner edge 42 may be rounded or chamfered as shown. The circlip 8 is of tapered section to allow the Belleville spring 4 to travel through the flat condition (during clutch release in the new condition).

The waved washer 16 is shown in more detail in Figure 10. The inner diameter of the waved washer 16 locates on the outside of the clutch fulcrum ring. The tags or members 15 are used to locate the Belleville spring 4 radially, thereby keeping it concentric with the clutch.

The undulations of the waved washer 16 load on one side against the diaphragm spring 6 and on the other side against the inner edge of the Belleville spring 4. Referring to Figure 7, when the clutch is part worn, then in the clamped condition the Belleville spring load drops to zero. From this point in the life of the clutch the Belleville spring may rattle if it were not preloaded against one or other of its mating components during normal running. The waved washer 16 provides this anti-rattle function.

Since the waved washer 16 is acting near the inner fulcrums of both the diaphragm spring 6 and the Belleville spring 4, then the effect of its load on the overall clutch characteristic will be minimised, though will not necessarily be negligible.

In the illustrated embodiment, three adjustment pegs 12 are shown equidistantly spaced about the cover 10.

During installation, when the circlip 8 is preloaded into its initial position (and also during subsequent adjustment), it is only that portion of the circlip 8 between the adjustment pegs 12 and away from the free ends 22,24 that will deform towards a true arc of a circle. The free ends 22,24 of the circlip 8 will not be stressed, and so will follow the original curvature of the circlip 8, that is they will deviate from the circle formed by the remainder of the circlip 8. Since the region of the Belleville spring 4 being supported by the free ends 22,24 of the circlip 8 is not being supported by a true circular fulcrum, the load characteristics of the assembly will be affected. Should this effect be judged excessive, two of the adjuster pegs 12 in the region of the free ends 22,24 of the circlip 8 may be positioned closer together. Alternatively, more, for example four, adjuster pegs 12 may be used.

In an alternative arrangement (not shown), the single split ring or circlip 8 may be replaced by two separate split rings or circlips, one disposed inside of the other, with the free ends of the respective circlips being disposed diametrically opposite one another. Instead of the tapered section of the single circlip 8, the outer circlip is of flat rectangular section and the inner circlip is of upright rectangular section, thereby providing the combination with an L-shaped section. The Belleville spring would sit on a higher end of the inner circlip, with freedom to go through a flattened position over a lower level of the outer circlip.

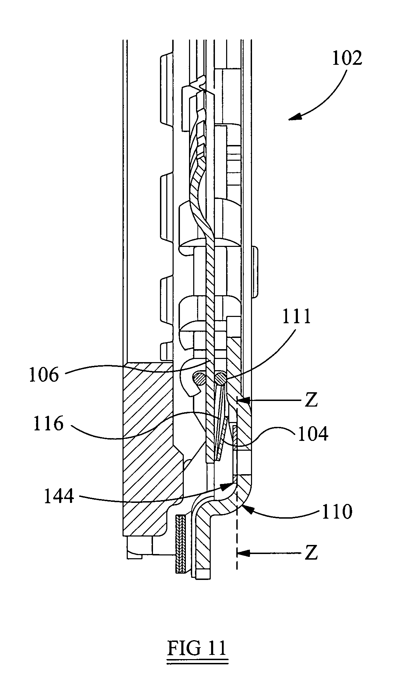

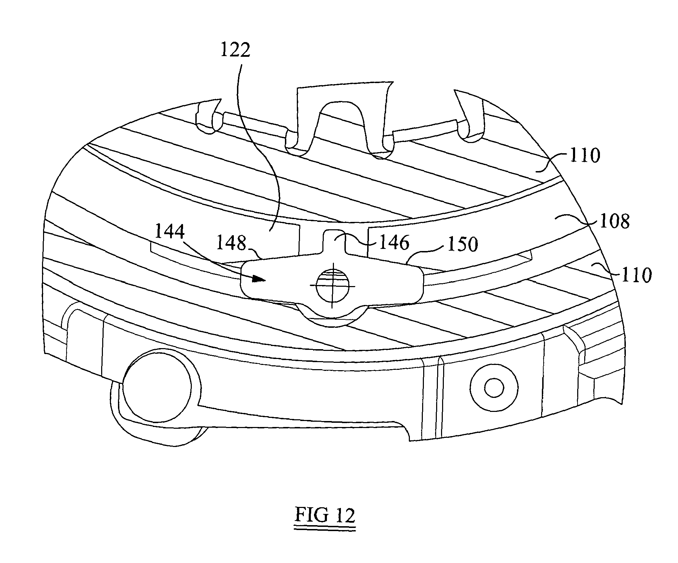

In a further alternative embodiment (Figures 11 and 12) a device is introduced to act as an automatic guide for the free ends, forcing them to move inwards to take up a closer approximation to the required true arc of a circle. Like parts will be referred to by like reference numerals save for the addition of 100 to the relevant reference numeral.

Figure 11 shows a part sectional view through a clutch assembly 102 in the region of a gap between the free ends of a split ring or circlip 108. A flat plate 144 is arranged sitting against an inner face of a cover 110. The flat plate 144 may be secured to the cover 110 in any suitable manner, for example by using a rivet through holes in the cover 110 and the flat plate 144 or by welding the flat plate 144 to the cover 110.

By reference to Figure 12 it can be seen that the flat plate 144 is generally lozenge shaped and has a tag 146 or member on the side facing the centre of the clutch. The tag 146 prevents the split ring or circlip 108 from rotating out of position in either direction, either during adjustment or during operation when the clutch may be vibrating cyclically during rotation. The free ends 122,124 of the circlip 108 are provided with angled chamfers 148,150 that mate with two of the angled faces of the flat plate 144. The angle of the angled chamfers 148,150 is chosen such that when the split ring or circlip 108 is adjusted, the free ends 122,124 will move towards one another at a rate determined by a change in the mean radius during adjustment. (It will be understood that while the circumference of the split ring or circlip is constant, the circumference of the true circle at the mean radius is changing with adjustment). The relationship is not constant throughout the whole range of adjustment, so a mean value is chosen to give a suitable compromise. The outer curvature of the cover 110 in this embodiment is recessed back to the level of its flat inner face so that the flat plate 144 can be located squarely on this face, the respective sides of the lozenge shaped flat plate 144 further preventing the flat plate 144 from rotating (for example where the flat plate 144 is riveted in position and the rivet may come loose through wear or incorrect fitting).

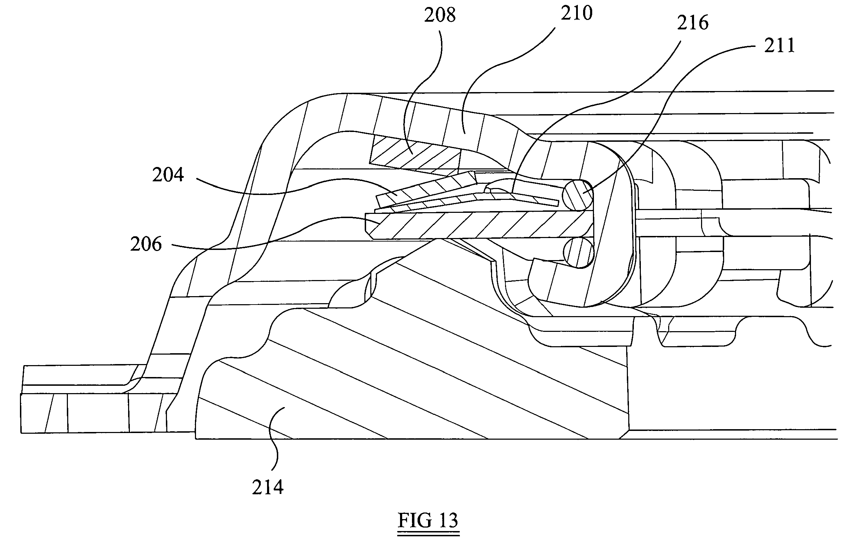

A still further embodiment is shown in Figure 13. Like parts will be referred to by like reference numerals save for the addition of 200 to the relevant reference numeral.

In previous embodiments, the cover 10,110 has a flat back face. In the embodiment shown in Figure 13, the back face of the cover 210 is angled. This gives a stiffer construction to the cover 210. It will be seen that in this embodiment, the split ring 208 is not tapered in section, but rather is parallel faced and sits against the angled face of the cover 210. Since the ring 208 is split, it can readily be coned to the small angle required to locate against the relevant face of an associated adjuster peg (not shown). As a result, the split ring 208 can be manufactured from a flat material of simple rectangular section (for example as is a plain circlip).

In this embodiment the Belleville spring 204 can go through the flat condition without bottoming out against the face of the split ring 208.

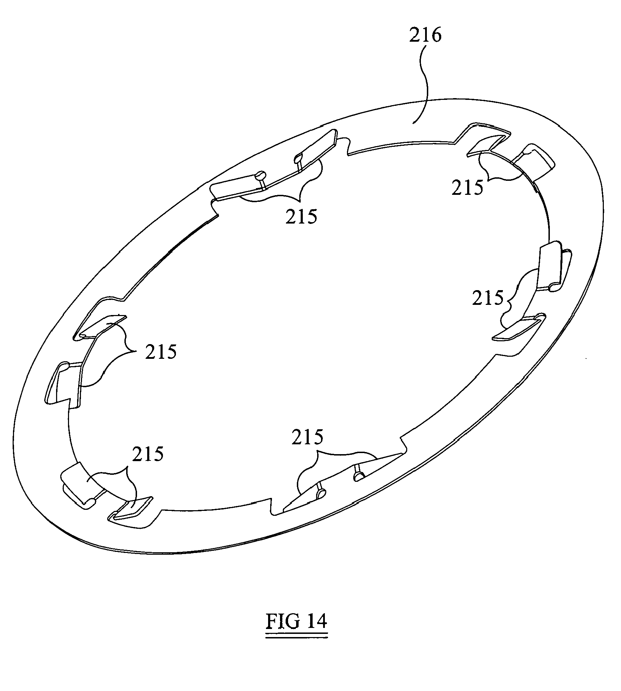

A modified form of support washer 216 is shown in Figure 14 used in connection with this embodiment. The support washer 216 provides an anti-rattle feature as well as locating the Belleville spring 204 radially. The support washer 216 is provided on its inner circumference with pairs of members 215. Each pair of members 215 is axially outwardly directed. Alternate pairs of members 215 are oppositely directed. The members 215 act as leaf springs between the support washer 216 and each of the diaphragm spring 206 and the cover 210 (inboard of the Belleville spring 204). The outer part of the support washer 216 is thus forced against the Belleville spring 204 pushing the Belleville spring 204 against the cover 210.

When the clutch is relatively new, the support washer 216 will be trapped by the greater force of the Belleville spring, the outer edge of which is forced against the diaphragm spring 206. This occurs whether the clutch is in an engaged or released condition.

As the clutch wears, the outer edge of the diaphragm spring 206 moves away from the cover 210, reducing the load on the Belleville spring 204. The support washer 216 maintains its load, keeping the Belleville spring 204 in contact with the cover 210, thereby preventing rattling, even when the load coming from the Belleville spring 204 through to the diaphragm spring 206 has reduced to zero.

In the illustrated embodiment, three pairs of members 215 are used to locate the Belleville spring 204 on their outer edges. It will be understood that more, or fewer, pairs may be used as required.

The inner edge of the support washer 216 and all of the members 215 locate on the outer surface of the circular section wire fulcrum ring 211 that locates the diaphragm spring 206 in the cover 210.

It will be understood that the modified support washer 216 may be used in other embodiments than that shown in Figure 13.

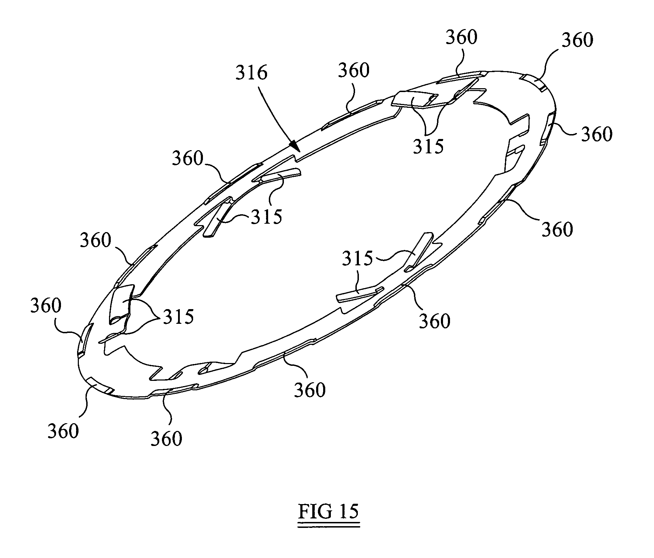

In a still further alternative embodiment a modified support washer 316 (Figures 15 to 16) is shown. Like parts will be referred to by like reference numerals save for the addition of 300 to the relevant reference numeral.

In previous embodiments as the diaphragm spring and the Belleville spring go through their full range of operating movement, it has been found necessary towards the fully released condition of the clutch assembly for the Belleville spring to go through beyond flat to a greater angle than the diaphragm spring. However in the previous embodiments the Belleville spring and the diaphragm spring (together with the support washer located between the two) could reach a fully nested position before the required travel had been reached.

One solution (not shown) is to introduce a spacer between the outer edge of the Belleville spring and the support washer. However, since the spacer does not extend very far radially inwards, the nested position was not reached until the Belleville spring had gone to a greater angle through flat than the diaphragm spring.

The support washer 316 shown in Figure 15 provides the advantages of a spacer while reducing part count and simplifying assembly. It can be seen that a plurality of deformed regions 360 spaced around the outer edge of the support washer 316 are provided. The deformed regions 360 are preferably equiangularly spaced about the periphery of the support washer. The deformed regions 360 may be formed by any suitable method, such as shearing and crimping.

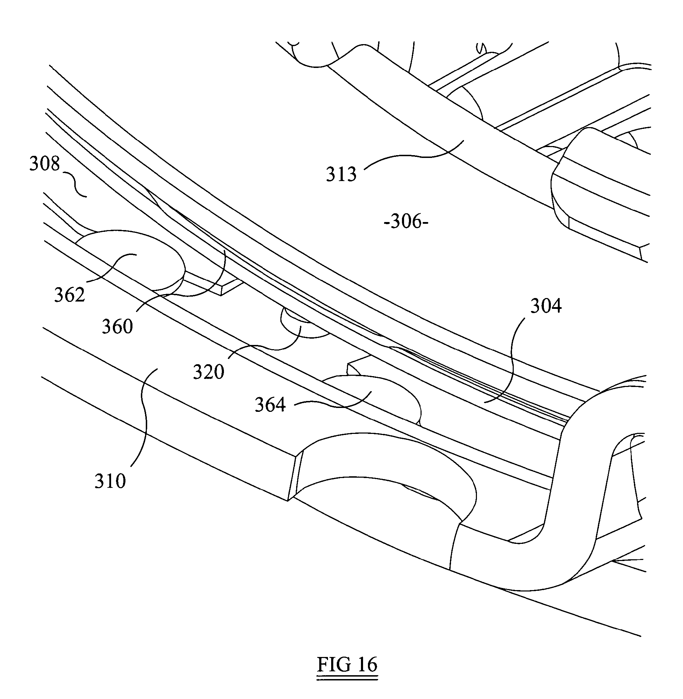

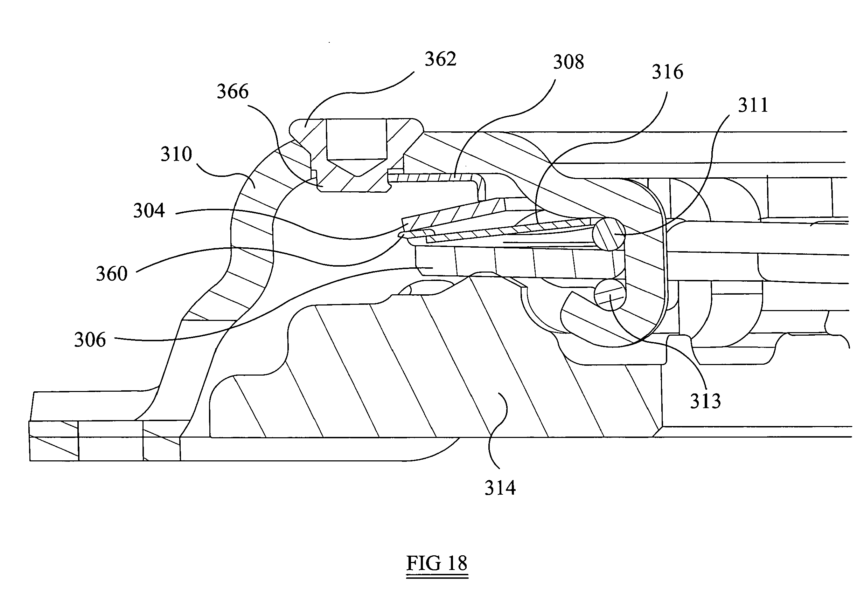

In the embodiment of Figures 16 and 18, the support washer of Figure 14 is shown in a suitable clutch arrangement. The lozenge shaped plate of Figures 11 and 12 between the free ends of the split ring to locate the split ring in position has been replaced. Instead stepped rivets 362,364 fitted to the cover restrain the tapered ends of the split ring 308. The tapered edges of the free ends of the split ring 308 are tangential to the diameters of stepped portions 365 of the rivets 360,362. The diameters of the stepped portions 365 of the rivets 360,362 locate the free ends of the split ring radially while the heads 366 of the rivets 360, 362 prevent undue axial movement of the split ring in the region of the rivets 360,362 (that is preventing the free ends of the split ring 308 from springing away from the rear face of the cover 310).

In this embodiment the tag 20 on the cover plate 10 (used for centralising the split ring 8 and preventing it from rotating is replaced by a deformation or pip 320 pressed into the cover 310.

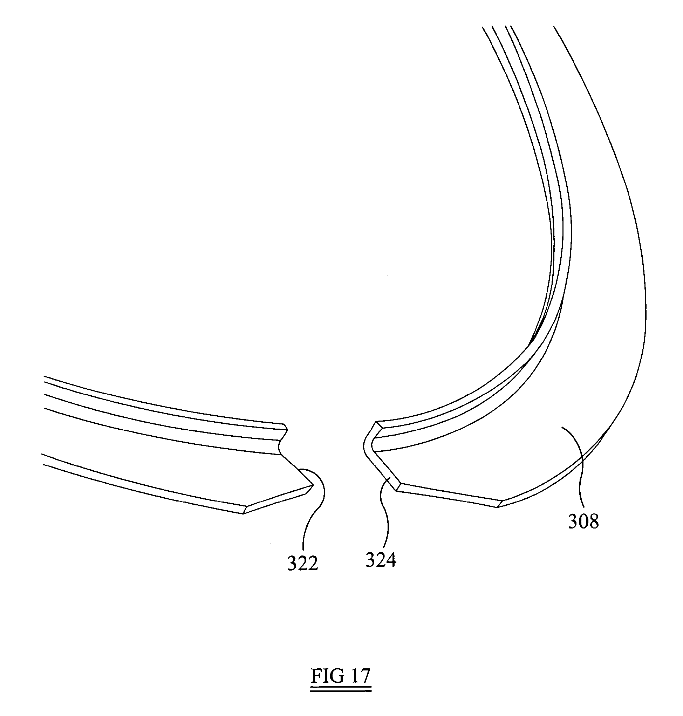

An alternative form of split ring 308 is shown in Figure 17. The alternative form is an L-section part which may be formed by pressing from a sheet material.

Figure 18 shows a part sectional view through a clutch assembly 302 in the region of one of the free ends of the split ring 308.

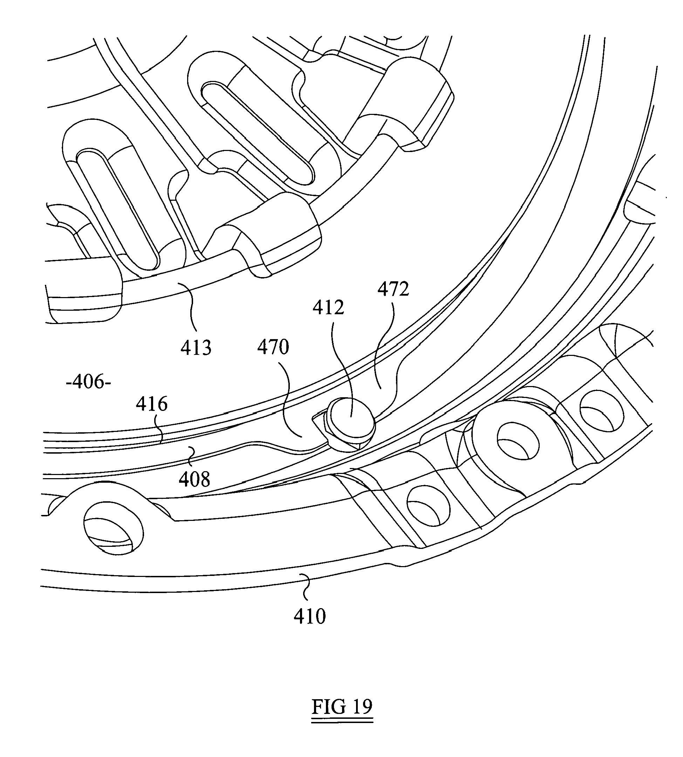

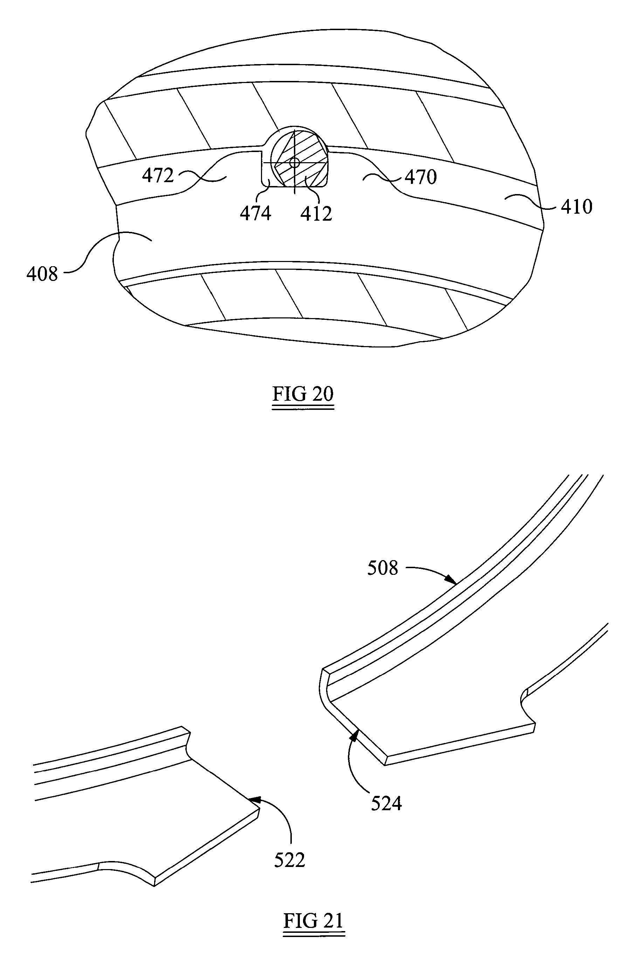

Figures 19 and 20 show a further modification to the clutch assembly of the present invention. The use of the tag 20 on the cover plate 10 and the pip 320 pressed into the cover plate 310 have been described as means of centrally locating the split ring 8,308 and preventing the split ring from rotating. However, to allow for a wide range of adjustment the gap about the tag 20 or pip 320 needs to be relatively large. For a given reduction in the effective diameter of the split ring 8,308 during adjustment, each of the free ends will move by π times the given reduction towards one another. During adjustment, due to friction between the adjuster pegs 12,312 and the split ring 8,308, the split ring 8,308 may rotate. This in turn may lead to one of the free ends of the split ring 8,308 moving round against the tag 20 or the pip 320, such that the other of the free ends will then be a significant distance from the tag 20 or pip 320. This in turn leads to the free ends of the split ring 8,308 being radially out of line with one another and each being out of line either way from the mean adjusted diameter of the rest of the split ring 8,308. Such a misalignment could in some cases cause problems with the proper functioning of the Belleville spring 4,304.

A solution to this problem is shown in Figures 19 and 20. Like parts will be referred to by like reference numerals save for the addition of 400 to the relevant reference numeral. By providing tags or lugs 470,472 on the flange section of the split ring 408 itself on each side of the split ring a symmetrical arrangement can be provided for. A cammed adjuster 412 is located in the slot 474 and is retained for rotational adjustment in the cover 410 of the clutch assembly. The width of the slot 474 created between the lugs 470,472 need only be slightly larger than the greatest dimension across the eccentric cam form of the adjuster 412 in order to allow freedom of movement during adjustment. The clearance here will be significantly less than required as between the free ends of the split ring and the stop (tag 20, pip 320) of the previous embodiments.

The radial depth of the split ring 408 within the slot 474 is preferably the same as that of the rest of the split ring in order to keep the bending stiffness as near constant as possible between all points of location of the split ring 408 (namely the three adjusters 412 and two stepped rivets (not shown in Figures 19 and 20) near the free ends of the split ring 408). This also means that the central of the three adjusters 412 is mounted at the same radial distance as the other two.

The stepped rivets which locate the free ends of the split ring 408, are mounted on a different pitch circle diameter since they act against the reduced section on the tapered ends of the split ring 408 with a plain pin diameter.

In extreme cases where high deflections of the Belleville spring 404 are required beyond flat, then the Belleville spring 404 may bottom out against the heads of the stepped rivets.

An alternative form of split ring is shown in Figure 21. Like parts will be referred to by like reference numerals save for the addition of 500 to the relevant reference numeral. The section of the free ends 522,524 of the split ring 508 is enlarged in the region of the tapers, so that the free ends 522,524 are formed out of a locally wider section. This enables the stepped rivets to be mounted at a larger pitch circle diameter, thereby moving the heads of the stepped rivets out from under the Belleville spring so avoiding any potential interference.

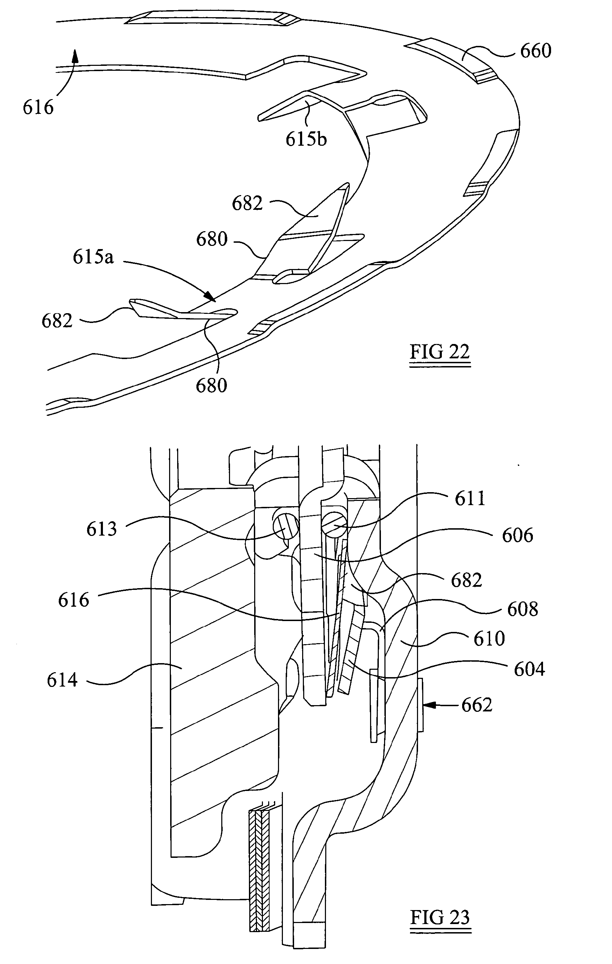

A further form of the support washer is shown by reference to Figures 22 and 23. Like parts will be referred to by like reference numerals save for the addition of 600 to the relevant reference numeral. The support washer 616 is substantially similar to the support washer 316 shown in Figure 15 and is provided on its inner circumference with pairs of members 615 and about its outer periphery with a plurality of deformed regions 660. Each pair of members 615 is axially outwardly directed with alternate pairs of members 615a,615b being oppositely directed. For those pairs of members 615a directed in use towards the Belleville spring 614 the form of the members has been modified. The modified members 615a comprise a first section 680 bent out of the plane of the support washer 616 at a first angle and a second section 682 bent at an angle to the first section such that the second section 682 is more steeply inclined at an angle to the plane of the support washer 616. The second section 682 of the modified member 615a is provided with a cut extending at 45 degrees starting at the point of the second section 682 adjacent to the support washer 618 extending to the part of the modified member 615a at the inner periphery of the support washer 616 thereby forming a sharp angle end on each of the modified members 615a. This allows the ends of the modified members 615a to extend through the central bore of the Belleville spring 604 (as shown in Figure 23) thereby further aiding in the location of the Belleville spring 604.

A further form of the split ring or circlip 708 is shown by reference to Figure 24. Like parts will be referred to by like reference numerals save for the addition of 700 to the relevant reference numeral. The split ring 708 is provided with both an inner peripheral rim 790 and an outer peripheral rim 792. In use the outer peripheral rim 792 is located outside the outer diameter of the diaphragm spring, the Belleville spring and the support washer and so does not interfere with the operation of the assembly.

At high speed, the portions of the split ring between each adjuster may centrifuge out distorting the shape of the split ring and causing the free ends to move out of position. The purpose of the outer peripheral rim 792 is to increase the radial stiffness of the split ring or circlip 708 thereby preventing this. A cut out or slot 774 may be provided in the outer peripheral rim 792 such that the adjusters may in use operate against the thin edge of the flat region of the split ring 708.

Preferably, the cut outs or slots 774 to either side of the central cut out or slot 774 are wider thereby allowing a range of tangential movement of the split ring at these positions during adjustment.

## Claims

1. A clutch assembly in which measurement and adjustment may be made after full assembly has been completed comprising a cover (10,110,210,310,410,610), a diaphragm spring (6,106,206,306,406,606), and a Belleville spring (4,104,204,304,404,604) located between the diaphragm spring and the cover, **characterised in that** the Belleville spring is located in an operative position by adjustable means

2. A clutch assembly according to claim 1, **characterised in that** the adjustable means comprises at least one split section ring (8,108,208,308,408,508,608), locating means and positioning means, the cover being provided with means (20,146,320) to locate each of the at least one split section rings in position with respect to the cover (10,110,210,310,410,610).

3. A clutch assembly according to claim 2, **characterised in that** the locating means comprises a generally circular element (16,116,216,316,416,616) having a plurality of spaced members (15,215,315,615), the spaced members retaining the Belleville spring (4,104,204,304,404,604) radially in position.

4. A clutch assembly according to claim 2 or claim 3, **characterised in that** the positioning means comprises a plurality of cam adjusters (12,112,212,312,412,612), each of the plurality of cam adjusters being located in a suitable opening in the cover (10,110,210,310,410,610).

5. A clutch assembly according to claim 4, **characterised in that** at least one of the plurality of cam adjusters (12,112,212,312,412,612) comprises a headed member having a first generally cylindrical shaft (36) disposed about a first longitudinal axis (A) and a second cammed shaft (34) extending from the first generally cylindrical shaft, the second cammed shaft being disposed about a second longitudinal axis (B) offset from the first.

6. A clutch assembly according to claim 5, **characterised in that** the second cammed shaft (34) comprises a plurality of faces, each of the plurality of faces being located at a different radial distance (C,D,E,F,G) from the first longitudinal axis (A).

7. A clutch assembly according to any of claims 4 to 6, **characterised in that** the positioning means is provided with tool engaging means (30).

8. A clutch assembly according to any of claims 2 to 7, **characterised in that** the at least one split section ring (8) has a tapering section.

9. A clutch assembly according to any of claims 2 to 7, **characterised in that** the at least one split section ring (308,508,608) is of 'L'-shaped section.

10. A clutch assembly according to any of claims 2 to 7, **characterised in that** there are two split section rings, one located inside the other, the ends of each split section ring being disposed diametrically one from the other.

11. A clutch assembly according to claim 10, **characterised in that** the outer split ring is of flat rectangular section and the inner split ring is of upright rectangular section.

12. A clutch assembly according to any of claims 2 to 11, **characterised in that** the or the outer of the at least one split ring (408,608) is further provided with at least one set of radially outward extending lugs (470,472), such that a one of the positioning means (142,612) can in use be located in a slot formed between the adjacent lugs (470,472).

13. A clutch assembly according to claim 3, **characterised in that** the spaced members (15) are radially directed and the generally circular element undulates in a circumferential direction.

14. A clutch assembly according to any of claims 2 to 8, **characterised in that** a flat plate (144) is located against the cover (110) in the region of the Belleville spring (104).

15. A clutch assembly according to claim 14, **characterised in that** a single split section ring (108) is provided and the flat plate (144) has angled faces that mate with angled chamfers (148,150) provided on free ends of the split section ring (108).

16. A clutch assembly according to any of claims 2 to 7, **characterised in that** a single split ring (108) is provided, the single split ring being of flat section, the cover (110) in the region adjacent the single split ring being angled towards the Belleville spring (104)

17. A clutch assembly according to claim 16, **characterised in that** the locating means is provided with a plurality of pairs of spaced members (215,315,615a,615b), each pair of spaced members (215,315,615a,615b), being disposed alternately in opposite axial directions, each spaced member of each pair extending from the locating means circumferentially in its respective axial direction.

18. A clutch assembly according to any of claims 3 to 15, **characterised in that** each pair of spaced members (215,315,615a,615b), is disposed alternately in opposite axial directions, each spaced member (15,215,315,615a,615b), of each pair extending from the locating means circumferentially in its respective axial direction.

19. A clutch assembly according to either claim 17 or claim 18, **characterised in that** in at least one axial direction, each of said pair of spaced members (615a) is provided with a cut off extending from a radially inward region adjacent the locating means to a free end of the spaced member (615a).

20. A clutch assembly according to any of claims 3 to 19, **characterised in that** the radially spaced members (315,615a,615b) are located radially inward on the locating means and **in that** a plurality of deformed regions (360,660) are provided on a radially outer periphery of the locating means.

21. A clutch assembly according to any of claims 2 to 20, **characterised in that** the assembly further comprises restraining means extending from the cover (310) to restrain the free ends of the or an outer one of the at least one split ring (308).

22. A clutch assembly according to claim 21 **characterised in that** the restraining means comprises a pair of stepped rivets (362,364;662) secured to the cover (310,610).
